Europäisches Patentamt

European Patent Office

Office européen des brevets

(11) Veröffentlichungsnummer: **0 342 516**

**A1**

## (12) EUROPÄISCHE PATENTANMELDUNG

(21) Anmeldenummer: 89108461.8

(22) Anmeldetag: 11.05.89

(51) Int. Cl.4: **A47J 31/54 , F24H 1/16 , F22B 27/14**

(30) Priorität: 17.05.88 CH 1859/88

(43) Veröffentlichungstag der Anmeldung:
23.11.89 Patentblatt 89/47

(84) Benannte Vertragsstaaten:
AT BE CH DE ES FR GB IT LI NL SE

(71) Anmelder: **Turmix AG**
**Buechstrasse 20**
**CH-8645 Jona(CH)**

(72) Erfinder: **Vetterli, Heinz**
**Hinterhofstrasse 24**
**CH-8808 Pfäffikon(CH)**
Erfinder: **Frisch, Martin**
**Kronenwiese 41**
**CH-8864 Reichenburg(CH)**

(74) Vertreter: **Scheidegger, Werner & Co.**
**Stampfenbachstrasse 48 Postfach**
**CH-8023 Zürich(CH)**

(54) Heizeinrichtung für eine Kaffeemaschine.

(57) Bei der als elektrisch beheizter Durchlauferhitzer ausgestalteten Einrichtung sind in einem Thermoblock (1), der aus zwei aufeinander liegenden Teilen (2,3) besteht, zwei getrennte kanalartige Durchführungen (5,6) für Heisswasser zur Kaffeezubereitung und für Dampf ausgebildet, wobei jeder der beiden Teile (2,3) eine an der Berührungsfläche (4) zwischen diesen offene kanalartige Durchführung (5,6) aufweist und gleichzeitig den Deckel für den jeweils anderen Teil bildet. Aufgrund der vorhandenen zwei getrennten kanalartigen Durchführungen (5,6) kann das Ventil (9) zum Umschalten einlasseitig auf der Kaltwasserseite angeordnet werden, so dass es nicht mehr verkalken kann.

Fig. 1

EP 0 342 516 A1

## Heizeinrichtung für eine Kaffeemaschine

Die Erfindung betrifft eine Heizeinrichtung für eine Kaffeemaschine zur Erzeugung von Heisswasser und Dampf in einem Durchlauferhitzer, der einen Thermoblock mit kanalartigen Durchführungen für einen elektrischen Heizdraht und für das aufzuheizende Wasser aufweist.

Es ist bekannt, eine Heizeinrichtung für eine Kaffeemaschine so auszugestalten, dass neben der Zubereitung von Kaffee auch die Erzeugung von Dampf möglich ist, um ein anderes Getränk schnell zu erhitzen. Dies macht es erforderlich, dass am Durchlauferhitzer zwei getrennte Auslässe vorhanden sind, von denen der eine über dem Siebhalter für das Kaffeepulver mündet, und der andere als abgewinkeltes Leitungsende zum Einführen in einen Getränkebehälter ausgebildet ist. Zum Umschalten auf den einen oder anderen Auslass muss vor diesen ein Ventil angeordnet sein. Es hat sich als nachteilig herausgestellt, dass dieses Ventil je nach Qualität des Wassers mehr oder weniger schnell verkalkt.

Der Erfindung lag daher die Aufgabe zugrunde, die Heizeinrichtung für eine Kaffeemaschine so auszubilden, dass durch Verkalkung des Ventils bedingte Ausfälle der Maschine vermieden werden. Diese Aufgabe wird durch eine Heizeinrichtung mit den Merkmalen gemäss Anspruch 1 gelöst. Durch die Anordnung von zwei getrennten kanalartigen Durchführungen für Heisswasser zur Kaffezubereitung und für Dampf oder Heisswasser ist es möglich, das Ventil einlasseitig auf der Kaltwasserseite der Heizeinrichtung anzuordnen, wo es nicht verkalkt, weil der Kalk erst bei der Wassererhitzung ausfällt.

In bevorzugter Ausgestaltung besteht bei dieser Heizeinrichtung der Thermoblock aus zwei flächig aufeinanderliegenden Teilen und in dem einen Teil ist die kanalartige Durchführung für Heisswasser und in dem anderen Teil des Thermoblocks die kanalförmige Durchführung für Dampf ausgebildet, wobei diese von der Berührungsfläche jeweils in das Teil sich hineinerstreckend vorzugsweise durch Fräsen hergestellt und bei beiden Teilen derart versetzt zueinander angeordnet sind, dass jeder Teil deckelartig die kanalartige Durchführung in dem anderen Teil abdeckt. Auf diese Weise sind die getrennten kanalartigen Durchführungen leicht herzustellen.

Ein Ausführungsbeispiel der Erfindung wird nachfolgend anhand der Zeichnungen näher erläutert. Es zeigen:

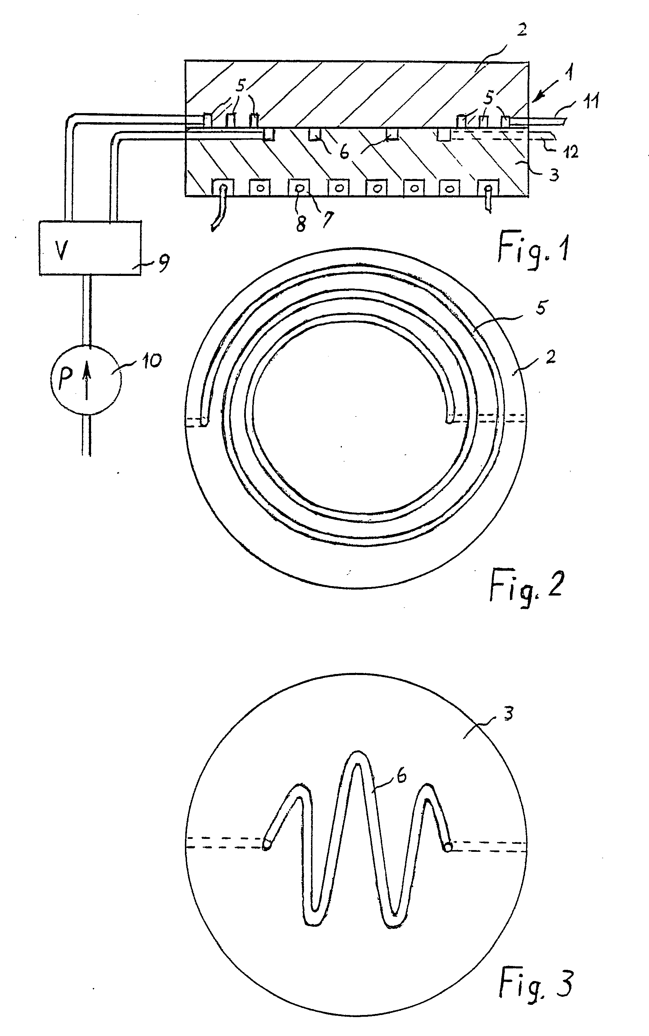

Fig. 1 in schematischer Darstellung einen Querschnitt durch den Thermoblock mit Anschlüssen;

Fig. 2 eine Draufsicht auf den einen Teil des Thermoblocks mit obenliegender Trennebene;

Fig. 3 eine Draufsicht auf den anderen Teil des Thermoblocks mit obenliegender Trennebene.

Die Heizeinrichtung für eine Kaffeemaschine weist einen Thermoblock 1 auf, der aus einem oberen Teil 2 und einem unteren Teil 3 besteht. In der Trennebene liegen die Teile 2 und 3 des Thermoblocks 1 mit einer ebenen Berührungsfläche 4 aufeinander. In dem oberen Teil 2 ist eine zur Berührungsfläche 4 hin offene kanalartige Durchführung 5 beispielsweise spiralförmig eingefräst. Der untere Teil 3 bildet den Deckel für die an der Berührungsfläche 4 offene kanalartige Durchführung 5.

Im unteren Teil 3 des Thermoblocks 1 ist ebenfalls von der Berührungsfläche 4 sich hineinerstreckend eine weitere kanalartige Durchführung 6 beispielsweise durch Fräsen ausgebildet, die von dem den Deckel bildenden Teil 2 abgedeckt ist. Im Teil 3 ist ferner an der Unterseite eine weitere kanalartige Durchführung 7 ausgebildet, in der elektrische Widerstandsheizdrähte als Heizwendel 8 angeordnet sind. Die kanalartige Durchführung 6 im unteren Teil 3 des Thermoblocks liegt näher an dieser Heizwendel 8 als die kanalartige Durchführung 5 im oberen Teil 2, und wegen des grösseren Wärmebedarfs für die Erzeugung von Dampf ist die kanalartige Durchführung 6 daher für den Dampf oder separates Heisswasser bestimmt, während die kanalartige Durchführung 5 im oberen Teil 2 die im Thermoblock gespeicherte Wärmeenergie ausnutzt und für Heisswasser zur Kaffeezubereitung bestimmt ist. Eingangsseitig sind die beiden getrennten kanalartigen Durchführungen 5 und 6 an ein Ventil 9 angeschlossen, mit dessen Hilfe der von einer Pumpe 10 geförderte Kaltwasserzulauf entweder in die kanalartige Durchführung 5 für Heisswasser oder in die kanalartige Durchführung 6 für Dampf gelenkt wird. Mit diesen verbundene getrennte Auslässe 11 und 12 führen zu den in der Zeichnung nicht weiter dargestellten Verbrauchsstellen für Heisswasser für die Zubereitung von Kaffee bzw. für Dampf.

Da die kanalartigen Durchführungen für Heisswasser und für Dampf getrennt sind, kann das Ventil einlasseitig angeordnet werden und daher nicht mehr verkalken, wobei die Ausbildung von zwei getrennten kanalartigen Durchführungen besonders vorteilhaft in zwei getrennten Teilen des Thermoblocks erfolgen kann, die jeweils den Deckel zum Abdecken der in dem anderen Teil ausgebildeten kanalartigen Durchführung bilden.

Bei einer anderen Ausführungsform sind die kanalartigen Durchführungen in jeweils beiden Teilen bzw. Hälften des Thermoblockes angeordnet, was zu einer Verbesserung des Wirkungsgrades führen kann.

Ferner ist es vorteilhaft, die beiden kanalartigen Durchführungen im Querschnitt vom Einlassende zum Auslassende sich vergrössernd auszuführen (Anpassung an den grösseren Volumenbedarf des Dampfes).

Dampf im Querschnitt vom Einlassende zum Auslassende vergrössern.

## Ansprüche

1. Heizeinrichtung für eine Kaffeemaschine zur Erzeugung von Heisswasser und Dampf in einem Durchlauferhitzer, der einen Thermoblock mit kanalartigen Durchführungen für einen elektrischen Heizdraht und für das aufzuheizende Wasser aufweist, dadurch gekennzeichnet, dass der Thermoblock (1-3) ausser der Durchführung (7) für den elektrischen Heizdraht (8) zwei getrennte kanalartige Durchführungen (5,6) für Heisswasser zur Kaffezubereitung und für Dampf oder separates Heisswasser aufweist.

2. Heizeinrichtung nach Anspruch 1, dadurch gekennzeichnet, dass die kanalartige Durchführung (6) für Dampf näher an der kanalartigen Durchführung (7) für den elektrischen Heizdraht (8) als die kanalartige Durchführung (5) für Kaffeewasser in dem Thermoblock ausgebildet ist.

3. Heizeinrichtung nach Anspruch 1, dadurch gekennzeichnet, dass der Thermoblock (1) aus zwei flächig aufeinanderliegenden Teilen (2,3) besteht und die kanalartige Durchführung (5) für Kaffeewasser in dem einen Teil (2) und die kanalartige Durchführung (6) für Dampf oder separates Heisswasser in dem anderen Teil (3) des Thermoblocks (1) von der Berührungsfläche (4) jeweils sich hineinerstreckend ausgebildet ist und beide kanalartigen Durchführungen (5,6) derart versetzt zueinander ausgebildet sind, dass jeder Teil (2,3) deckelartig die kanalartige Durchführung in dem anderen Teil abdeckt.

4. Heizeinrichtung nach einem der vorhergehenden Ansprüche, dadurch gekennzeichnet, dass jede der getrennten kanalartigen Durchführungen (5,6) ein Einlassende und ein Auslassende aufweist und beide Einlassenden an eine Absperrvorrichtung (9) angeschlossen sind, die an eine Wasserpumpe (10) angeschlossen ist.

5. Heizeinrichtung nach einem der Ansprüche 1-4, dadurch gekennzeichnet, dass beide Auslassenden an eine Vorrichtung zur Druckbegrenzung angeschlossen sind, welche direkt in die Atmosphäre führen.

6. Heizeinrichtung nach einem der Ansprüche 1-5, dadurch gekennzeichnet, dass sich die kanalartigen Durchführungen (5,6) für Heisswasser und

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| Y | EP-A-4659 (TURMIX AG) <br> * Seite 6, Zeile 29 - Seite 10, Zeile 18; Figur 1 * <br> --- | 1 | A47J31/54 <br> F24H1/16 <br> F22B27/14 |
| Y | DE-U-8516331 (SIEMENS AG) <br> * Seite 5, Zeile 21 - Zeile 24; Figur 4 * <br> --- | 1 | |
| A | BE-A-457941 (GOYENS) <br> * Seite 2, Zeile 24 - Seite 3, Zeile 17; Figuren 1, 2 * <br> --- | 1, 2 | |
| A | FR-A-1130580 (PELLISSIER) <br> * das ganze Dokument * <br> --- | 1, 4 | |
| A | DE-B-2437775 (WIGO GOTTLOB WIDMANN & SÖHNE KG) <br> * Spalte 2, Zeile 50 - Zeile 68; Figuren 1, 2 * <br> --- | 6 | |
| A | GB-A-1152170 (URQUHART'S LTD.) <br> * das ganze Dokument * <br> --- | 3 | |
| A | FR-A-2558052 (N.V. PHILIPS GLOEILAMPENFABRIEKEN) <br> --- | | **RECHERCHIERTE SACHGEBIETE (Int. Cl.4 )** |
| A | FR-A-2130585 (OMRE COSTRUZIONI ELETTROMECCHANICHE S.A.S.) <br> ----- | | A47J <br> F24H <br> F22B |

Der vorliegende Recherchenbericht wurde für alle Patentansprüche erstellt

| Recherchenort | Abschlußdatum der Recherche | Prüfer |
|---|---|---|
| DEN HAAG | 04 AUGUST 1989 | MEINDERS H. |